# EUROPEAN PATENT APPLICATION

(11) **EP 2 482 521 A2**
(43) Date of publication of application: **01.08.2012**
(21) Application number: 12152585.1
(22) Date of filing: 26.01.2012
(51) Int. Cl.: H04L 29/06

(54) **Method, system and device for detecting an attempted intrusion into a network**

(30) Priority: 31.01.2011 US 201113017231
(71) Applicant: General Electric Company, Schenectady, NY 12345 (US)
(72) Inventor: Whitney, Tobias Ranier, Atlanta, GA Georgia 30339 (US)
(74) Representative: Bedford, Grant Richard

(57) **Abstract**

Described herein are embodiments of methods, systems and devices for detecting an attempted intrusion into a network (306). In one aspect, the network (306) is an advanced metering infrastructure (AMI) network. In another aspect, the network (306) is an home area network (HAN). In accordance with one aspect, a method of detecting an attempted intrusion into a network (306) is described. This embodiment of a method comprises configuring an entrapment meter (302) such that it receives data packets from a network (306), but does not transmit data packets to the network (306). The entrapment meter (302) is also configured such that the entrapment meter (302) appears vulnerable to unauthorized intrusion to the network (306). The configured entrapment meter (302) is used to detect an attempted unauthorized intrusion into the network (306). The attempted unauthorized intrusion is monitored.

## Description

The increasing demand for energy and the use of finite resources for energy production have led to the use of increased technology for the production, transmission, distribution and consumption of energy in order to make, distribute and use energy more efficiently and wisely. To that end, utility service providers have begun employing information technology systems integrated with their energy production, transmission, distribution and metering systems to enable more efficient monitoring and operation of such systems. Concurrently, vendors and manufacturers have also begun employing similar technology in products and devices that consume electricity, such as appliances (e.g., refrigerators, washing machines and dryers, dishwashers, HVAC systems, lighting systems, stoves, water heaters, etc.) and electronics (e.g., televisions, stereos, computers, etc.). These efforts are often broadly categorized as smart grid, smart meter and smart appliance technologies.

The smart grid marries information technology with the current electrical infrastructure. The smart grid is, in essence, an "energy Internet," delivering real-time energy information and knowledge-empowering smarter energy choices. Roles for the smart grid include enabling the integration and optimization of more renewable energy (such as wind and solar); driving significant increases in the efficiency of the electrical network; and, empowering consumers to manage their energy usage and save money without compromising their lifestyle.

Smart grid technologies provide utilities and consumers with real-time knowledge and decision-making tools that empowers them to save energy, resources, money, and the environment. The smart grid is not a singular product, but rather a collection of hardware and software that works together to make today's electrical grid more intelligent. Similar to how the Internet turned a disaggregated collection of computers into a more powerful tool, overlaying the current power infrastructure with smart grid technology is like connecting the Internet to the computer, making an already useful machine much better and providing people with information to make intelligent decisions. Similarly, the smart grid, or the "energy Internet," empowers consumers, businesses and utilities to make smarter energy choices.

Smart grid components include automation software and intelligent electronic hardware systems that control the transmission and distribution grids. Smart grid automation technologies - such as energy management systems and distribution management systems - help provide real-time knowledge and control over the distribution and transmission grids. On the transmission side, Energy Management Systems (EMS) provide real-time information on the grid's status, helping utilities automate various grid functionalities remotely. This automation technology helps utilities choose the best, most affordable generation mix (known as economic dispatch), keeping costs lower for consumers and businesses; reduce losses and waste in the delivery of power to drive a more efficient system; and maintain system reliability to help ensure a steady supply of power to customers. Distribution Management System (DMS) comprises the smart grid automation technology that provides utilities with real-time information about the distribution network and allows utilities to remotely control switches in the grid. The DMS is the heart of a smarter distribution grid; enabling utilities to manage distributed renewable generation, support grid efficiency technologies, and control the isolation and restoration of outages. Without DMS, the utility gets very little real-time information about the distribution grid and can't realize many of the benefits of a smarter grid.

Furthermore, smart grid technologies can extend beyond the electrical grid. With smart grid technologies in the home-like smart meters, smart energy panels, and smart appliances-consumers can have access to more accurate data and knowledge about electricity pricing, helping them save money and lower their environmental footprint. In some instances, smart meters are used to communicate with devices in the home such as smart appliances and the like over networks such as home area networks (HANs).

Currently, most power companies offer one set price for electricity throughout the day, regardless of how expensive it is to produce. Most consumers don't know that it costs much more to produce energy during the peak hours of the day-typically between 2 p.m. and 7 p.m.-than it does at any other time. A smart meter can communicate time of use pricing via smart home energy panels or other display devices to help consumers make smarter energy choices throughout the day. Consumers will be more likely to use high-consuming devices during off-peak pricing periods, when electricity prices are cheaper. With smart meters, buying electricity is like buying other consumer goods-with price impacting purchase decision. For example, a consumer can choose to have their house pre-cooled before arriving home to ensure the air conditioning system can remain off during expensive peak pricing hours, without impacting the consumer's comfort level. A consumer can also have their water pre-heated to avoid peak prices and lower their energy bill. A year-long study by the U.S. Department of Energy showed that real-time pricing information provided by the smart meter helped consumers reduce their electricity costs 10% on average and their peak consumption by 15%.

Smart meters can also enable consumers to pre-pay their electricity bill and help utilities better detect and manage outages. Smart meters coupled with advanced metering infrastructure (AMI) helps pinpoint problems on the grid, allowing utilities to determine exactly which customers are without power. Compare this to today, when many utilities still wait for customer calls to notify them of outages.

Smart appliances can work in concert with smart meters and the smart grid to avoid peak-hour energy use and top-tier pricing-without any negative impact on the consumer-by adapting to price signals from the utility. For example, a dryer may automatically switch from high heat to "fluff" if electricity hits a certain per-kilowatt-hour rate-even if the homeowner is at work. Or, the automatic defrost on a refrigerator can delay itself until a time of reduced electricity rates. If the freezer delays the defrost cycle until after peak energy hours, consumers pay less for the same amount of energy. There are countless ways to conserve energy and save money when smart appliances are coupled with smart meters and time-of-use pricing information including, for example, updating software or firmware of a smart appliances using the smart grid and smart meter infrastructure. The smart grid, smart meter and smart appliance technologies enable utilities to communicate (duplex) with smart appliances in the home. This ability creates opportunities beyond that of energy management.

However, security must be considered before these opportunities can be fully embraced.

Advanced Metering Infrastructure (AMI) refers to systems that measure, collect and analyze energy usage, and interact with advanced devices such as electricity meters, gas meters, water meters, and the like through various communication media either on request (on-demand) or on pre-defined schedules. This infrastructure includes hardware, software, communications, consumer energy displays and controllers, customer associated systems, Meter Data Management (MDM) software, supplier and network distribution business systems, etc.

The network between the measurement devices and business systems allows collection and distribution of information to customers, suppliers, utility companies and service providers. This enables these businesses to either participate in, or provide, demand response solutions, products and services. By providing information to customers, the system assists a change in energy usage from their normal consumption patterns, either in response to changes in price or as incentives designed to encourage lower energy usage use at times of peak-demand periods or higher wholesale prices or during periods of low operational systems reliability. However, this information must be secure, and security measures are desired to detect an attempted intrusion into an advanced metering infrastructure (AMI) network or a HAN.

Therefore, what is desired is a method, system and device that overcomes challenges in the art, some of which are described above, to detect an attempted intrusion into a network.

Described herein are embodiments of methods, systems and devices for detecting an attempted intrusion into a network.

In accordance with one aspect of the present invention, a method of detecting an attempted intrusion into a network is described. This embodiment of a method comprises configuring an entrapment meter such that it receives data packets from a network, but does not transmit data packets to the network. The entrapment meter is also configured such that the entrapment meter appears vulnerable to unauthorized intrusion to the network. The configured entrapment meter is used to detect an attempted unauthorized intrusion into the network. The attempted unauthorized intrusion is monitored.

In accordance with another aspect, a system for detecting an attempted intrusion into an advanced metering infrastructure (AMI) network is described. This embodiment of a system is comprised of an entrapment meter, a memory, and a processor operably connected with the memory and the entrapment meter. The entrapment meter is configured to receive data packets from a network, but not transmit data packets to the network, and is configured in a manner such that the entrapment meter appears vulnerable to unauthorized intrusion to the network. The processor is configured to detect an attempted unauthorized intrusion into the network and monitor the attempted unauthorized intrusion.

In accordance with yet another aspect, a device is provided. One embodiment of the device is comprised of a memory, a processor operably connected with the memory, and a network interface card that is configured to connect the device with a network. The network interface card is configured to receive data packets from the network, but not transmit data packets to the network, and the network interface card is set to promiscuous mode. The processor is configured to execute at least one of a network intrusion detection system (NIDS) or a host-based intrusion detection system (HIDS), wherein the device detects an attempted unauthorized intrusion into the network by analyzing the received data packets using the NIDS or by analyzing at least a portion of the network using the host-based intrusion detection system (HIDS).

Various advantages will be set forth in part in the description which follows or may be learned by practice. The advantages will be realized and attained by means of the elements and combinations particularly pointed out in the appended claims. It is to be understood that both the foregoing general description and the following detailed description are exemplary and explanatory only and are not restrictive, as claimed.

The accompanying drawings, which are incorporated in and constitute a part of this specification, illustrate embodiments and together with the description, serve to explain the principles of the methods and systems:
FIG. 1 is a block diagram of a section of an exemplary utility distribution system;
FIG. 2 is an exemplary illustration of an exemplary smart meter configured to communicate with one or more appliances or devices over a first network and configured to communicate with a second computing device over a second network;
FIG. 3 illustrates an exemplary overview block diagram of a system for detecting an attempted unauthorized intrusion into an AMI network or a HAN;
FIG. 4 illustrates an embodiment of a meter configured to act as an entrapment meter and configured to connect with an AMI network and a HAN;
FIG. 5 illustrates a block diagram of an entity capable of operating as meter electronics in accordance with one embodiment of the present invention;
FIG. 6 is a flowchart illustrating the operations that may be taken to detect an attempted intrusion in a network according to one embodiment of the present invention; and
FIG. 7 is a block diagram illustrating an exemplary operating environment for performing the disclosed methods.

Before the present methods and systems are disclosed and described, it is to be understood that the methods and systems are not limited to specific synthetic methods, specific components, or to particular compositions. It is also to be understood that the terminology used herein is for the purpose of describing particular embodiments only and is not intended to be limiting.

As used in the specification and the appended claims, the singular forms "a," "an" and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other additives, components, integers or steps. "Exemplary" means "an example of" and is not intended to convey an indication of a preferred or ideal embodiment. "Such as" is not used in a restrictive sense, but for explanatory purposes.

Disclosed are components that can be used to perform the disclosed methods and systems. These and other components are disclosed herein, and it is understood that when combinations, subsets, interactions, groups, etc. of these components are disclosed that while specific reference of each various individual and collective combinations and permutation of these may not be explicitly disclosed, each is specifically contemplated and described herein, for all methods and systems. This applies to all aspects of this application including, but not limited to, steps in disclosed methods. Thus, if there are a variety of additional steps that can be performed it is understood that each of these additional steps can be performed with any specific embodiment or combination of embodiments of the disclosed methods.

The present methods and systems may be understood more readily by reference to the following detailed description of preferred embodiments and the Examples included therein and to the Figures and their previous and following description.

Smart appliances are appliances that can be programmed to operate when it is most cost effective to do so based on time-of-use pricing signals from the utility. For example, a smart refrigerator would only enable the defrost cycle to occur when electricity prices are lowest, without compromising a consumer's lifestyle. Smart meters are among the fundamental building blocks of smart grid deployments. They track and report energy usage by time of day, enabling utilities to charge less for electricity used during off-peak hours. As a result, consumers can choose to shift energy-intensive activities to times when rates are lower to save on energy costs. In general, smart appliances can be configured to communicate with a smart meter via a home area network (HAN) and smart meters are configured to communicate with the smart grid via an advanced metering infrastructure (AMI) network. Unauthorized intruders can attack AMI networks and HANs, like any network. Therefore, a need exists to detect such intruders and monitor their activities.

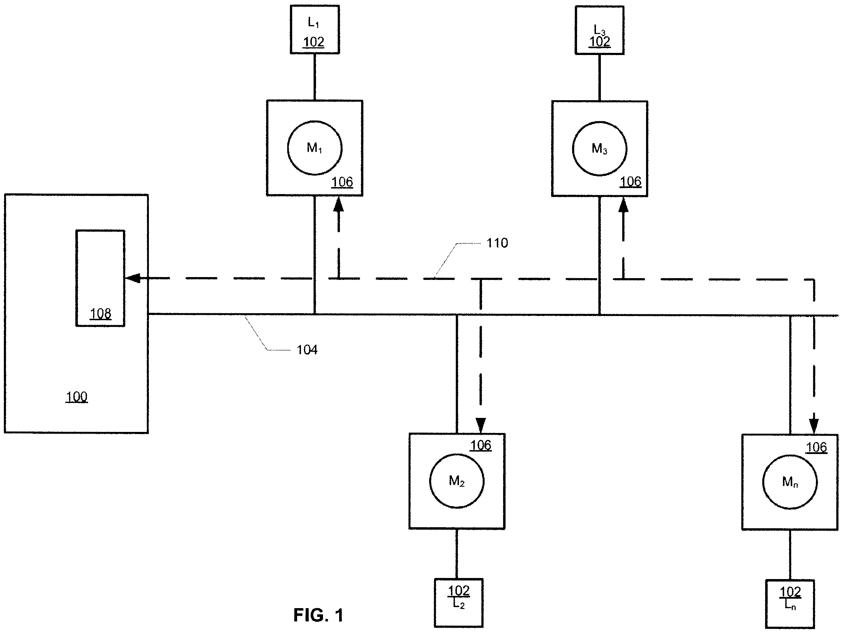

Referring to FIG. 1, an illustration of one type of system that would benefit from embodiments of the present invention is provided. FIG. 1 is a block diagram of a section of an exemplary utility distribution system such as, for example, an electric distribution system. As shown in FIG. 1, a utility service is delivered by a utility provider 100 to various loads L₁-Lₙ 102 through a distribution system 104. In one aspect, the utility service provided is electric power. Consumption of the utility service by the loads 102 is measured at the load locations by meters M₁-Mₙ 106. If an electric meter, the meter 106 can be single-phase or a poly-phase electric meter, as known to one of ordinary skill in the art, depending upon the load 102. In one aspect, the electric meter 106 is a smart meter as described herein and as known to one of ordinary skill in the art. Hereinafter, the specification will refer to the meter 106 as a "meter," "electric meter," and/or "smart meter," where the terms can be used interchangeably. One non-limiting example of a smart meter is the GE I210+c meter as available from General Electric Company (Schenectady, NY). In one aspect, the meter 106 is configured to communicate via a network with the loads 102. In one aspect, the loads 102 can be smart appliances, as described herein and as known to one of ordinary skill in the art. Smart appliances are available form vendors or manufacturers such as, for example, General Electric Company, Whirlpool Corporation (Benton Harbor, MI), LG Electronics USA (Englewood Cliffs, NJ), among others. In one aspect, the meter 106 communicates with the loads 102 using a home area network (HAN), as known to one of ordinary skill in the art. While consumption information is used by the utility provider 100 primarily for billing the consumer, it also can be used for other purposes including planning and profiling the utility distribution system, controlling loads, and the like, in some instances, utility providers 100 desire to electronically communicate with the meters 106 for numerous purposes including scheduling disconnection or connection of utility services to the loads 102, automatic meter reading (AMR), load shedding and load control, automatic distribution and smart-grid applications, outage reporting, providing additional services such as Internet, video, and audio, etc. In many of these instances, the meters 106 can be configured to communicate with one or more computing devices 108 through a communications network such as an advanced metering infrastructure (AMI) network 110, which can be wired, wireless or a combination of wired and wireless, as known to one of ordinary skill in the art. In one aspect, the communications network 110 can comprise at least part of a smart grid network. Therefore, it is desired that the meters 106 and system such as that shown in FIG. 1 are configured to have capabilities beyond that of mere delivery and measurement of utility services.

Described herein are embodiments of methods, systems and devices for detecting an attempted intrusion into a network. In one aspect, the network is an advanced metering infrastructure (AMI) network. In another aspect, the network is a home area network (HAN). In one aspect, a method of detecting an attempted intrusion into an advanced metering infrastructure (AMI) network is described. In one aspect, a method of detecting an attempted intrusion into an home area network (HAN) is described. One embodiment of a method comprises configuring an entrapment meter such that it receives data packets from a network such as an AMI network or HAN, but does not transmit data packets to the network. The entrapment meter can also be configured such that the entrapment meter appears vulnerable to unauthorized intrusion to the network. The configured entrapment meter is used to detect an attempted unauthorized intrusion into the network. The attempted unauthorized intrusion is monitored. In general, the technical effect of embodiments of the present invention provide an improvement over current methods of detecting and monitoring unauthorized intrusion into a network.

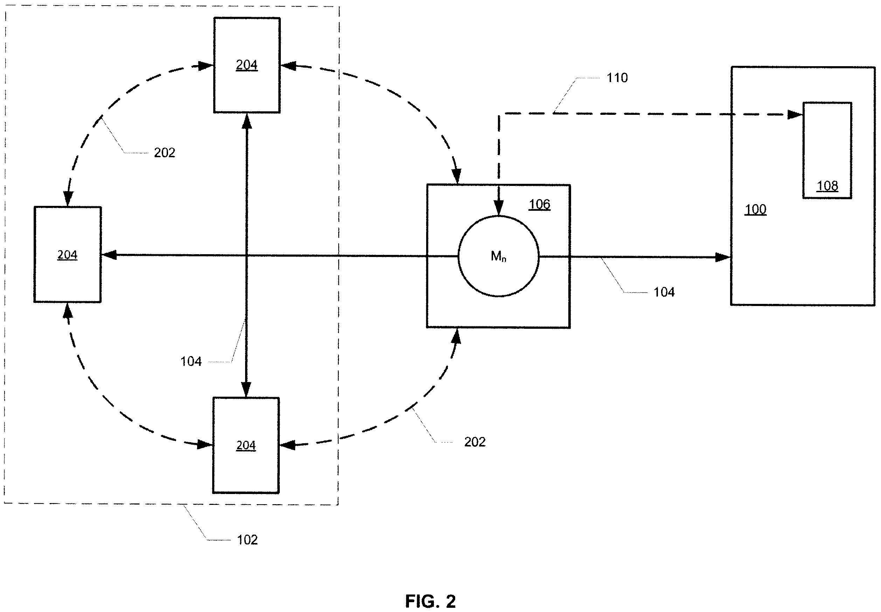

FIG. 2 is an exemplary illustration of an exemplary smart meter configured to communicate with one or more appliances or devices over a first network and configured to communicate with a second computing device over a second network. In one aspect, the first network is a HAN. In one aspect, the second network is an AMI network. In one aspect, the appliances are smart appliances as described herein and as known to one of ordinary skill in the art. As used herein, the specification will refer to an appliance 204 as an "appliance," a "smart appliance" and/or a "device" where the terms can be used interchangeably. As shown in FIG. 2, a first network 202 is used to communicate between one or more smart appliances 204 or devices and a meter 106. In one aspect, one or more smart appliances 204 comprise at least a portion of a load 102, and can form a network 202 that communicates with the meter 106. The meter 106 also measures consumption of the utility service as provided by the distribution system 104. Furthermore, the meter 106 is configured to communicate over a second network 110. In one aspect, the meter 106 can communicate with at least a second computing device 108 via the second network 110. In one aspect, the meter 106 is operably connected to the first network 202 and the second network 110. In one aspect, the first network 202 is a HAN and second network 110 is an AMI network. In one aspect, the AMI network 110 utilizes one or more of via one or more of a WPAN (e.g., ZigBee, Bluetooth), LAN/WLAN (e.g., 802.11n, microwave, laser, etc.), WMAN (e.g., WiMAX, etc.), WAN/WWAN (e.g., UMTS, GPRS, EDGE, CDMA, GSM, CDPD, Mobitex, HSDPA, HSUPA, 3G, etc.), RS232, USB, Firewire, Ethernet, wireless USB, cellular, OpenHAN, power line carrier (PLC), broadband over power lines (BPL), and the like. In one aspect, the AMI network 110 comprises at least a portion of a smart grid network. The HAN 202 can be wireless, wired or a combination of wired and wireless. The meter 106 is configured to communicate over the AMI network 110. In one aspect, the meter 106 can communicate with at least a second computing device 108 via the AMI network 110. In one aspect, the meter 106 can communicate with the devices 204 via the HAN 202. In one aspect, communication between the meter 106 and the devices 204 can be via one or more of a WPAN (e.g., ZigBee, Bluetooth), LAN/WLAN (e.g., 802.11n, microwave, laser, etc.), WMAN (e.g., WiMAX, etc.), WAN/WWAN (e.g., UMTS, GPRS, EDGE, CDMA, GSM, CDPD, Mobitex, HSDPA, HSUPA, 3G, etc.), RS232, USB, Firewire, Ethernet, wireless USB, cellular, OpenHAN, power line carrier (PLC), broadband over power lines (BPL), HomePlug, Insteon, Z-Wave, and the like. In one aspect, the AMI network 110 comprises at least a portion of a smart grid network.

In one aspect, the meter 106 is configured as an entrapment meter. In one aspect, the entrapment meter is used for detecting an attempted intrusion into the AMI network 110 or the HAN 202. In one aspect, the entrapment meter can be configured in a manner that is apparently insecure, enticing an intruder to attack it and try to install a payload. Once the entrapment meter has been hijacked, the intruder can be monitored via an intrusion detection system (IDS) until sufficient evidence has been gathered about the suspect's intent and actions against the meter or the meter infrastructure. The data can be used to determine the means and methods of attacks, motivations of attackers and identify up to date methods to safeguard meter deployments. In one aspect, the entrapment meter is configured to receive data packets from the AMI network 110 or HAN 202, but does not transmit data packets to the AMI network 110 or HAN 202. This configuration prevents an intruder from damaging the AMI network 110 or HAN 202. In one aspect, a processor associated with the entrapment meter emulates a connection to the AMI network 110 or HAN 202 so that it appears to an intruder that data is being passed to and received from the AMI network 110 or HAN 202. In one aspect, the entrapment meter is configured in a manner such that the entrapment meter appears vulnerable to unauthorized intrusion to the AMI network 110 or HAN 202. In one aspect, configuring the entrapment meter in a manner such that the entrapment meter appears vulnerable to unauthorized intrusion to the AMI network 110 or HAN 202 comprises receiving data packets from the AMI network 110 or HAN 202 using a network interface card set to promiscuous mode. In one aspect, an attempted unauthorized intrusion into the AMI network 110 or HAN 202 is detected using the entrapment meter. In one aspect, the received data packets are analyzed using a network intrusion detection system (NIBS) to detect the attempted unauthorized intrusion into the AMI network 110 or HAN 202. In one aspect, at least a portion of the NIDS is executing on a processor that comprises the entrapment meter. In one aspect, at least a portion of the NIDS is executing on a processor external to the entrapment meter, wherein the processor is operably connected to the entrapment meter through a network such as the AMI network 110. In one aspect, detecting an attempted unauthorized intrusion into the AMI network 110 or HAN 202 comprises analyzing at least a portion of the AMI network 110 or HAN 202 using a host-based intrusion detection system (HIDS). In one aspect, at least a portion of the HIDS is executing on a processor that comprises the entrapment meter. In one aspect, at least a portion of the HIDS is executing on a processor external to the entrapment meter, wherein the processor is operably connected to the entrapment meter through a network such as the AMI network 110. The detected attempted authorized intrusion is then monitored. In one aspect, the events associated with the attempted intrusion into the AMI network 110 or HAN 202 are stored. This can be accomplished by storing information about the events on a memory device. In one aspect, this can be performed by storing information about the events on a computer memory associated with a computing device that is used to monitor the intrusion. In one aspect, the stored events associated with the attempted intrusion into the AMI network 110 or HAN 202 are analyzed for unauthorized activities.

In one aspect, a computing device 108 can be used to monitor the entrapment meter. Such monitoring can occur separate from the transmission of data packets on the AMI network 110. In one aspect, software running on a remote server such as, for example, the computing device 108 can perform the intrusion detection functions for the entrapment meter. In one aspect, software executing on a processor associated with the entrapment meter can perform the intrusion detection functions. In one aspect, a system for detecting an attempted intrusion into a network is comprised of an entrapment meter, such as meter 106, a memory and a processor (both of which can be incorporated into computing device 108 or in the meter 106, or shared between the meter 106 and the computing device 108). In one aspect, the entrapment meter is configured to receive data packets from an AMI network 110 or HAN 202, but not transmit data packets to the AMI network 110 or HAN 202, and is configured in a manner such that the entrapment meter appears vulnerable to unauthorized intrusion to the AMI network 110 or HAN 202. In one aspect, the processor is operably connected with the memory and the entrapment meter through, for example, a bus or a network, and the processor is configured to detect an attempted unauthorized intrusion into the AMI network 110 or HAN 202 and monitor the attempted unauthorized intrusion. In one aspect, the entrapment meter comprises one or more network interface cards to connect the AMI network 110, HAN 202 and the entrapment meter. Configuring the entrapment meter in a manner such that the entrapment meter appears vulnerable to unauthorized intrusion to the AMI network 110 or HAN 202 can comprise receiving data packets from the AMI network 110 or HAN 202 using the one or more network interface cards set to promiscuous mode. In one aspect, the system further comprises a network intrusion detection system (NIDS). Detecting the attempted unauthorized intrusion into the AMI network 110 or HAN 202 comprises analyzing the received data packets using the NIDS. In one aspect, the system further comprises a host-based intrusion detection system (HIDS). Detecting an attempted unauthorized intrusion into the AMI network 110 or HAN 202 comprises analyzing at least a portion of the AMI network 110 or HAN 202 using the host-based intrusion detection system (HIDS).

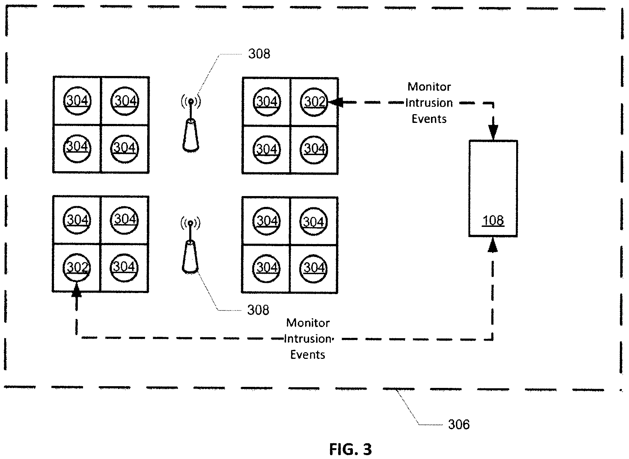

FIG. 3 illustrates an exemplary overview block diagram of a system for detecting an attempted unauthorized intrusion into an AMI network or HAN. In FIG. 3, an entrapment meter 302 is installed among a plurality of meters 304. As part of an AMI network 306, the meters 302, 304 are associated with access points 308 used to communicate between a meter 302, 304 and a HAN. In one aspect, one entrapment meter 302 is installed per access point 308. In one aspect, as described herein, the entrapment meters 302 can be used to detect attempted intrusion activities to the AMI network 306. In one aspect, the intrusion events can be captured and stored for future analysis.

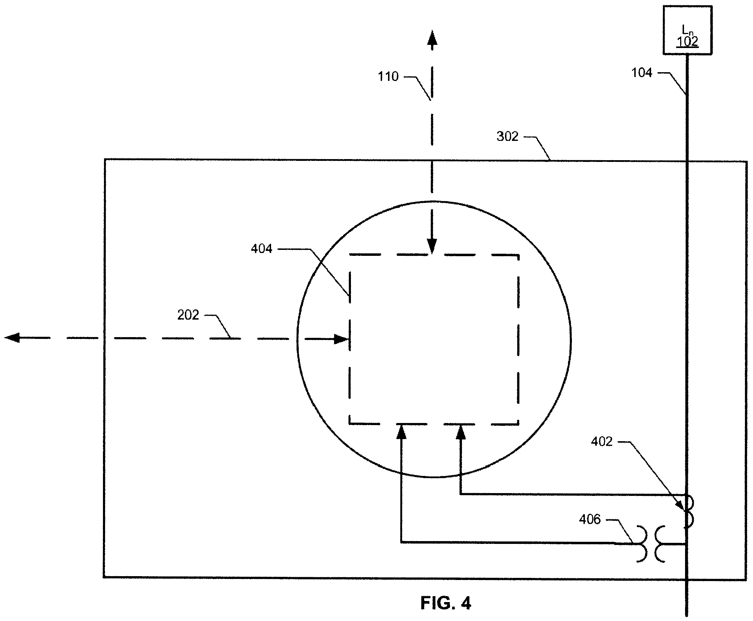

FIG. 4 illustrates an embodiment of a meter configured to act as an entrapment meter 302. Meter electronics 404 enable the entrapment meter 302 to communicate with the AMI network 110 and the HAN 202. In one aspect, meter electronics 404 include one or more network interface cards to connect the AMI network 110, HAN 202 and the entrapment meter. In one aspect, configuring the entrapment meter in a manner such that the entrapment meter appears vulnerable to unauthorized intrusion to the AMI network 110 or HAN 202 comprises receiving data packets from the AMI network 110 or HAN 202 using the one or more network interface cards set to promiscuous mode. In one aspect, the entrapment meter 302 is configured to only receive data from the network 110, 202, but not transmit data to the network 110, 202. In one aspect, the meter electronics 404 include a processor. In one aspect, the processor emulates a connection to the AMI network 110 or HAN 202 so that it appears to an intruder that data is being passed to and received from the AMI network 110 or HAN 202. In one aspect, the entrapment meter 302 is configured to be monitored by a separate computing device such as computing device 108. In one aspect, the entrapment meter 302 is configured to be monitored by a separate computing device such as device 108 over the AMI network 110. In one aspect, the processor can help implement all or parts of a network intrusion detection system (NIDS) and/or a host-based intrusion detection system (HIDS). In one aspect, detecting the attempted unauthorized intrusion into the AMI network 110 or HAN 202 comprises analyzing the received data packets using the NIDS. In one aspect, detecting an attempted unauthorized intrusion into the AMI network 110 or HAN 202 comprises analyzing at least a portion of the AMI network 110 or HAN 202 using the host-based intrusion detection system (HIDS). Further comprising the entrapment meter 302 are one or more current transformers (CTs) 402 and one or more potential transformers (PTs) as may be required for metering, monitoring and power for the entrapment meter 302.

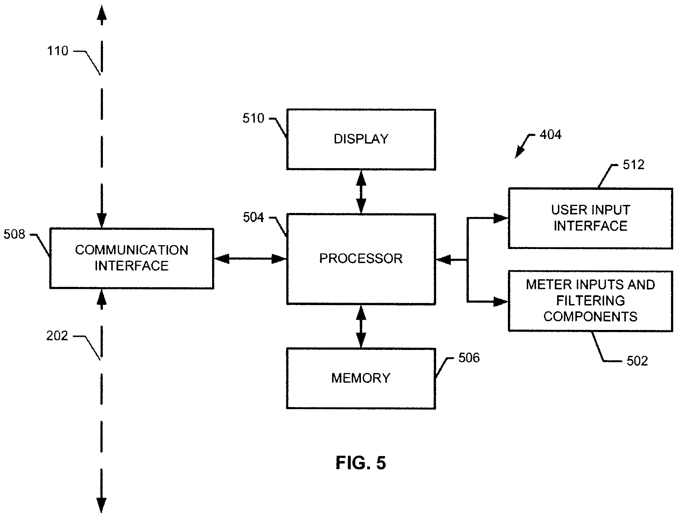

Referring now to FIG. 5, a block diagram of an entity capable of operating as meter electronics 404 is shown in accordance with one embodiment of the present invention. The entity capable of operating as meter electronics 404 includes various means for performing one or more functions in accordance with embodiments of the present invention, including those more particularly shown and described herein. It should be understood, however, that one or more of the entities may include alternative means for performing one or more like functions, without departing from the spirit and scope of the present invention. As shown, the entity capable of operating as meter electronics 404 can generally include means, such as one or more processors 504 for performing or controlling the various functions of the entity. As shown in FIG. 5, in one embodiment, meter electronics 404 can comprise meter inputs and filtering components 502. In one aspect, the meter inputs and filter components 402 can comprise, for example, voltage and current inputs, one or more ADCs, and filtering components. Further comprising this embodiment of meter electronics 404 are one or more processors 504 and memory 506. In one embodiment, the one or more processors 504 are in communication with or include memory 506, such as volatile and/or non-volatile memory that stores content, data or the like. For example, the memory 506 may store content transmitted from, and/or received by, the entity. For example, the memory may data about attempted intrusions into an AMI network 110 or HAN 202 connected to the meter. Also, for example, the memory 506 may store software applications, instructions or the like for the processor to perform steps associated with operation of the entity in accordance with embodiments of the present invention. In particular, the one or more processors 504 may be configured to perform the processes discussed in more detail herein for detecting an attempted intrusion into an AMI network 110 or HAN 202. For example, according to one embodiment the one or more processors 504 can be configured to receive data packets from the AMI network 110 or HAN 202, but not transmit data packets to the AMI network 110 or HAN 202, and execute at least one of a network intrusion detection system (NIDS) or a host-based intrusion detection system (HIDS), wherein the device detects an attempted unauthorized intrusion into the AMI network 110 or HAN 202 by analyzing the received data packets using the NIDS or analyze at least a portion of the AMI network 110 or HAN 202 using the host-based intrusion detection system (HIDS). In one aspect, the processor can be configured to emulate a connection to the AMI network 110 or HAN 202 so that it appears to an intruder that data is being passed to and received from the AMI network 110 or HAN 202. In addition to the memory 506, the one or more processors 504 can also be connected to at least one interface or other means for displaying, transmitting and/or receiving data, content or the like. In this regard, the interface(s) can include at least one communication interface 508 or other means for transmitting and/or receiving data, content or the like, as well as at least one user interface that can include a display 510 and/or a user input interface 512. In one aspect, the communication interface 508 can be one or more network interface cards. In one aspect, the one or more network interface cards can be set to promiscuous mode. In one aspect, the communication interface 508 can include a wireless transceiver. The user input interface 512, in turn, can comprise any of a number of devices allowing the entity to receive data from a user, such as a keypad, a touch display, a joystick or other input device.

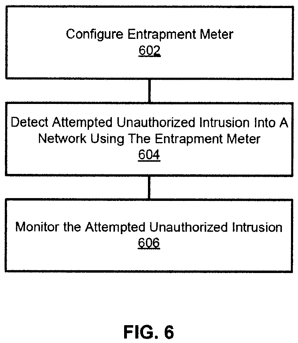

Referring now to FIG. 6, the operations are illustrated that may be taken to detect an attempted intrusion into a network such as an AMI network or HAN. At step 602, an entrapment meter is configured to receive data packets from a network, but not transmit data packets to the network and configured such that the entrapment meter appears vulnerable to unauthorized intrusion to the network. In one aspect, configuring the entrapment meter in a manner such that the entrapment meter appears vulnerable to unauthorized intrusion to the network comprises receiving data packets from the network using a network interface card set to promiscuous mode. At step 604, an attempted unauthorized intrusion into the network is detected using the entrapment meter. In one aspect, detecting an attempted unauthorized intrusion into the network comprises analyzing the received data packets using a network intrusion detection system (NIDS). In one aspect, detecting an attempted unauthorized intrusion into the network comprises analyzing at least a portion of the network using a host-based intrusion detection system (HIDS). At step 606, the attempted unauthorized intrusion is monitored. In one aspect, the network is an AMI network. In another aspect, the network is a HAN.

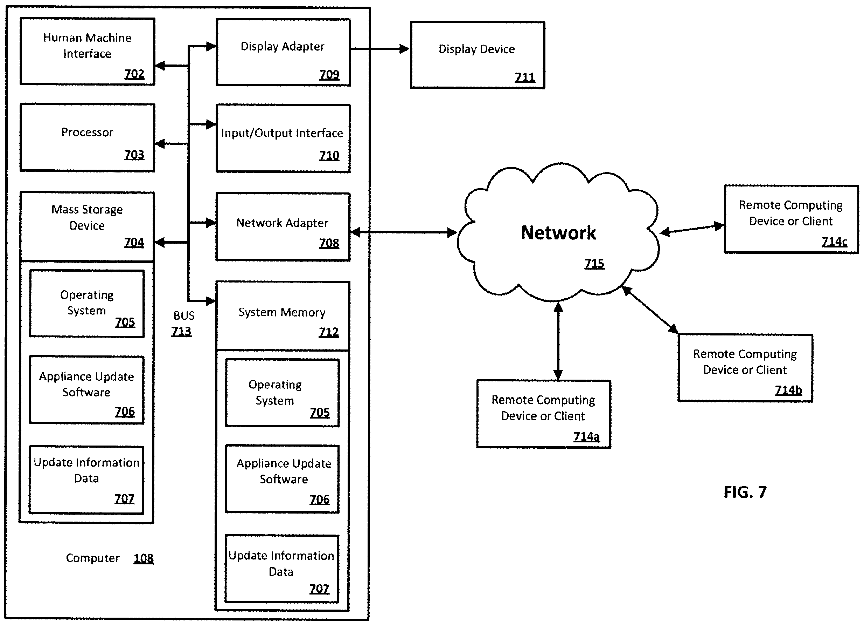

The above system has been described above as comprised of units. One skilled in the art will appreciate that this is a functional description and that software, hardware, or a combination of software and hardware can perform the respective functions. A unit, such as a smart appliance, a smart meter, a smart grid, a utility computing device, a vendor or manufacturer's computing device, etc., can be software, hardware, or a combination of software and hardware. The units can comprise the intrusion detection software 706 as illustrated in FIG. 7 and described below. In one exemplary aspect, the units can comprise a computing device 108 as illustrated in FIG. 7 and described below.

FIG. 7 is a block diagram illustrating an exemplary operating environment for performing the disclosed methods. This exemplary operating environment is only an example of an operating environment and is not intended to suggest any limitation as to the scope of use or functionality of operating environment architecture. Neither should the operating environment be interpreted as having any dependency or requirement relating to any one or combination of components illustrated in the exemplary operating environment.

The present methods and systems can be operational with numerous other general purpose or special purpose computing system environments or configurations. Examples of well known computing systems, environments, and/or configurations that can be suitable for use with the systems and methods comprise, but are not limited to, personal computers, server computers, laptop devices, and multiprocessor systems. Additional examples comprise set top boxes, programmable consumer electronics, network PCs, minicomputers, mainframe computers, smart meters, smart-grid components, distributed computing environments that comprise any of the above systems or devices, and the like.

The processing of the disclosed methods and systems can be performed by software components. The disclosed systems and methods can be described in the general context of computer-executable instructions, such as program modules, being executed by one or more computers or other devices. Generally, program modules comprise computer code, routines, programs, objects, components, data structures, etc. that perform particular tasks or implement particular abstract data types. The disclosed methods can also be practiced in grid-based and distributed computing environments where tasks are performed by remote processing devices that are linked through a communications network. In a distributed computing environment, program modules can be located in both local and remote computer storage media including memory storage devices.

Further, one skilled in the art will appreciate that the systems and methods disclosed herein can be implemented via a general-purpose computing device in the form of a computing device 108. The components of the computing device 108 can comprise, but are not limited to, one or more processors or processing units 703, a system memory 712, and a system bus 713 that couples various system components including the processor 703 to the system memory 712. In the case of multiple processing units 703, the system can utilize parallel computing.

The system bus 713 represents one or more of several possible types of bus structures, including a memory bus or memory controller, a peripheral bus, an accelerated graphics port, and a processor or local bus using any of a variety of bus architectures. By way of example, such architectures can comprise an Industry Standard Architecture (ISA) bus, a Micro Channel Architecture (MCA) bus, an Enhanced ISA (EISA) bus, a Video Electronics Standards Association (VESA) local bus, an Accelerated Graphics Port (AGP) bus, and a Peripheral Component Interconnects (PCI), a PCI-Express bus, a Personal Computer Memory Card Industry Association (PCMCIA), Universal Serial Bus (USB) and the like. The bus 713, and all buses specified in this description can also be implemented over a wired or wireless network connection and each of the subsystems, including the processor 703, a mass storage device 704, an operating system 705, intrusion detection software 706, intrusion detection data 707, a network adapter 708, system memory 712, an Input/Output Interface 710, a display adapter 709, a display device 711, and a human machine interface 702, can be contained within one or more remote computing devices or clients 714a,b,c at physically separate locations, connected through buses of this form, in effect implementing a fully distributed system or distributed architecture.

The computing device 108 typically comprises a variety of computer readable media. Exemplary readable media can be any available media that is non-transitory and accessible by the computing device 108 and comprises, for example and not meant to be limiting, both volatile and non-volatile media, removable and non-removable media. The system memory 712 comprises computer readable media in the form of volatile memory, such as random access memory (RAM), and/or non-volatile memory, such as read only memory (ROM). The system memory 712 typically contains data such as intrusion detection data 707 and/or program modules such as operating system 705 and intrusion detection software 706 that are immediately accessible to and/or are presently operated on by the processing unit 1003.

In another aspect, the computing device 108 can also comprise other non-transitory, removable/non-removable, volatile/non-volatile computer storage media. By way of example, FIG. 7 illustrates a mass storage device 704 that can provide non-volatile storage of computer code, computer readable instructions, data structures, program modules, and other data for the computing device 108. For example and not meant to be limiting, a mass storage device 704 can be a hard disk, a removable magnetic disk, a removable optical disk, magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like.

Optionally, any number of program modules can be stored on the mass storage device 1004, including by way of example, an operating system 705 and intrusion detection software 706. Each of the operating system 705 and intrusion detection software 706 (or some combination thereof) can comprise elements of the programming and the intrusion detection software 706. Intrusion detection data 707 can also be stored on the mass storage device 704. Intrusion detection data 707 can be stored in any of one or more databases known in the art Examples of such databases comprise, DB2® (IBM Corporation, Armonk, NY), Microsoft® Access, Microsoft® SQL Server, (Microsoft Corporation, Bellevue, Washington), Oracle®, (Oracle Corporation, Redwood Shores, California), mySQL, PostgreSQL, and the like. The databases can be centralized or distributed across multiple systems.

In another aspect, the user can enter commands and information into the computing device 108 via an input device (not shown). Examples of such input devices comprise, but are not limited to, a keyboard, pointing device (e.g., a "mouse"), a microphone, a joystick, a scanner, tactile input devices such as gloves, and other body coverings, and the like. These and other input devices can be connected to the processing unit 703 via a human machine interface 702 that is coupled to the system bus 713, but can be connected by other interface and bus structures, such as a parallel port, game port, an IEEE 1394 Port (also known as a Firewire port), a serial port, or a universal serial bus (USB).

In yet another aspect, a display device 711 can also be connected to the system bus 713 via an interface, such as a display adapter 709. It is contemplated that the computing device 108 can have more than one display adapter 709 and the computing device 108 can have more than one display device 711. For example, a display device can be a monitor, an LCD (Liquid Crystal Display), or a projector. In addition to the display device 711, other output peripheral devices can comprise components such as speakers (not shown) and a printer (not shown), which can be connected to the computing device 108 via Input/Output Interface 710. Any step and/or result of the methods can be output in any form to an output device. Such output can be any form of visual representation, including, but not limited to, textual, graphical, animation, audio, tactile, and the like.

The computing device 108 can operate in a networked environment using logical connections to one or more remote computing devices or clients 714a,b,c. By way of example, a remote computing device 714 can be a personal computer, portable computer, a server, a router, a network computer, a smart meter, a vendor or manufacture's computing device, smart grid components, a peer device or other common network node, and so on. Logical connections between the computing device 108 and a remote computing device or client 714a,b,c can be made via a local area network (LAN) and a general wide area network (WAN). Such network connections can be through a network adapter 708. A network adapter 708 can be implemented in both wired and wireless environments. Such networking environments are conventional and commonplace in offices, enterprise-wide computer networks, intranets, and other networks 715 such as an AMI network, HAN, and the Internet.

For purposes of illustration, application programs and other executable program components such as the operating system 705 are illustrated herein as discrete blocks, although it is recognized that such programs and components reside at various times in different storage components of the computing device 108, and are executed by the data processor(s) of the computer. An implementation of intrusion detection software 706 can be stored on or transmitted across some form of computer readable media. Any of the disclosed methods can be performed by computer readable instructions embodied on computer readable media. Computer readable media can be any available media that can be accessed by a computer. By way of example and not meant to be limiting, computer readable media can comprise "computer storage media" and "communications media." "Computer storage media" comprise volatile and non-volatile, removable and non-removable media implemented in any methods or technology for storage of information such as computer readable instructions, data structures, program modules, or other data. Exemplary computer storage media comprises, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

The methods and systems can employ Artificial Intelligence techniques such as machine learning and iterative learning. Examples of such techniques include, but are not limited to, expert systems, case based reasoning, Bayesian networks, behavior based AI, neural networks, fuzzy systems, evolutionary computation (e.g. genetic algorithms), swarm intelligence (e.g. ant algorithms), and hybrid intelligent systems (e.g. Expert inference rules generated through a neural network or production rules from statistical learning).

As described above and as will be appreciated by one skilled in the art, embodiments of the present invention may be configured as a system, method, or computer program product. Accordingly, embodiments of the present invention may be comprised of various means including entirely of hardware, entirely of software, or any combination of software and hardware. Furthermore, embodiments of the present invention may take the form of a computer program product on a computer-readable storage medium having computer-readable program instructions (e.g., computer software) embodied in the storage medium. Any suitable non-transitory computer-readable storage medium may be utilized including hard disks, CD-ROMs, optical storage devices, or magnetic storage devices.

Embodiments of the present invention have been described above with reference to block diagrams and flowchart illustrations of methods, apparatuses (i.e., systems) and computer program products. It will be understood that each block of the block diagrams and flowchart illustrations, and combinations of blocks in the block diagrams and flowchart illustrations, respectively, can be implemented by various means including computer program instructions. These computer program instructions may be loaded onto a general purpose computer, special purpose computer, or other programmable data processing apparatus, such as the one or more processors 504 discussed above with reference to FIG. 5, to produce a machine, such that the instructions which execute on the computer or other programmable data processing apparatus create a means for implementing the functions specified in the flowchart block or blocks.

These computer program instructions may also be stored in a non-transitory computer-readable memory that can direct a computer or other programmable data processing apparatus (e.g., one or more processors 504 of FIG. 5) to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

Accordingly, blocks of the block diagrams and flowchart illustrations support combinations of means for performing the specified functions, combinations of steps for performing the specified functions and program instruction means for performing the specified functions. It will also be understood that each block of the block diagrams and flowchart illustrations, and combinations of blocks in the block diagrams and flowchart illustrations, can be implemented by special purpose hardware-based computer systems that perform the specified functions or steps, or combinations of special purpose hardware and computer instructions.

Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is no way intended that an order be inferred, in any respect. This holds for any possible non-express basis for interpretation, including: matters of logic with respect to arrangement of steps or operational flow; plain meaning derived from grammatical organization or punctuation; the number or type of embodiments described in the specification.

Throughout this application, various publications may be referenced. The disclosures of these publications in their entireties are hereby incorporated by reference into this application in order to more fully describe the state of the art to which the methods and systems pertain.

Many modifications and other embodiments of the invention set forth herein will come to mind to one skilled in the art to which these embodiments of the invention pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

Various aspects and embodiments of the present invention are defined by the following numbered clauses:
1. A method of detecting an attempted intrusion into a network comprising:
   configuring an entrapment meter, wherein the entrapment meter receives data packets from a network, but does not transmit data packets to the network;
   configuring the entrapment meter in a manner such that the entrapment meter appears vulnerable to unauthorized intrusion to the network;
   detecting, using the entrapment meter, an attempted unauthorized intrusion into the network; and
   monitoring the attempted unauthorized intrusion.
2. The method of clause 1, wherein the network is an advanced metering infrastructure (AMI) network.
3. The method of any preceding clause, wherein the network is a home area network (HAN).
4. The method of any preceding clause, wherein configuring the entrapment meter in a manner such that the entrapment meter appears vulnerable to unauthorized intrusion to the network comprises receiving data packets from the network using a network interface card set to promiscuous mode.
5. The method of any preceding clause, further comprising detecting the attempted unauthorized intrusion into the network by analyzing the received data packets using a network intrusion detection system (NIDS).
6. The method of any preceding clause, wherein detecting, using the entrapment meter, an attempted unauthorized intrusion into the network comprises analyzing the received data packets using a network intrusion detection system (NIDS).
7. The method of any preceding clause, wherein detecting, using the entrapment meter, an attempted unauthorized intrusion into the network comprises analyzing at least a portion of the network using a host-based intrusion detection system (HIDS).
8. The method of any preceding clause, further comprising storing events associated with the attempted intrusion into the network.
9. The method of any preceding clause, wherein the stored events associated with the attempted intrusion into the network are analyzed for unauthorized activities.
10. A system for detecting an attempted intrusion into a network comprised of:
   an entrapment meter, wherein the entrapment meter is configured to receive data packets from a network, but not transmit data packets to the network, and is configured in a manner such that the entrapment meter appears vulnerable to unauthorized intrusion to the network;
   a memory; and
   a processor operably connected with the memory and the entrapment meter, wherein the processor is configured to:
      detect an attempted unauthorized intrusion into the network; and
      monitor the attempted unauthorized intrusion.
11. The system of any preceding clause, wherein the network is an advanced metering infrastructure (AMI) network.
12. The system of any preceding clause, wherein the network is a home area network (HAN).
13. The system of any preceding clause, wherein the entrapment meter comprises a network interface card to connect to the network and configuring the entrapment meter in a manner such that the entrapment meter appears vulnerable to unauthorized intrusion to the network comprises receiving data packets from the network using the network interface card set to promiscuous mode.
14. The system of any preceding clause, further comprising a network intrusion detection system (NIDS), wherein detecting the attempted unauthorized intrusion into the network comprises analyzing the received data packets using the NIDS.
15. The system of any preceding clause, further comprising a network intrusion detection system (NIDS), wherein detecting an attempted unauthorized intrusion into the network comprises analyzing the received data packets using the NIDS.
16. The system of any preceding clause, further comprising a host-based intrusion detection system (HIDS), wherein detecting an attempted unauthorized intrusion into the network comprises analyzing at least a portion of the network using the host-based intrusion detection system (HIDS).
17. The system of any preceding clause, wherein events associated with the attempted intrusion into the network are stored on the memory.
18. The system of any preceding clause, wherein the stored events associated with the attempted intrusion into the network are analyzed for unauthorized activities.
19. A device comprised of:
   a memory;
   a processor operably connected with the memory; and
   a network interface card that is configured to connect the device with a network, wherein the network interface card is configured to receive data packets from the network, but not transmit data packets to the network, and the network interface card is set to promiscuous mode, and wherein the processor is configured to execute at least one of a network intrusion detection system (NIDS) or a host-based intrusion detection system (HIDS), wherein the device detects an attempted unauthorized intrusion into the network by analyzing the received data packets using the NIDS or by analyzing at least a portion of the network using the host-based intrusion detection system (HIDS).
20. The device of any preceding clause, wherein the network is an advanced metering infrastructure (AMI) network.
21. The device of any preceding clause, wherein the network is a home area network (HAN).
22. The device of any preceding clause, wherein events associated with the attempted intrusion into the network are stored on the memory.
23. The device of any preceding clause, wherein the stored events associated with the attempted intrusion into the network are analyzed for unauthorized activities.

## Claims

1. A method of detecting an attempted intrusion into a network comprising:
configuring an entrapment meter (302), wherein the entrapment meter (302) receives data packets from a network (306), but does not transmit data packets to the network (306);
configuring the entrapment meter (302) in a manner such that the entrapment meter (302) appears vulnerable to unauthorized intrusion to the network (306);
detecting, using the entrapment meter (302), an attempted unauthorized intrusion into the network (306); and
monitoring the attempted unauthorized intrusion.

2. The method of claim 1, wherein the network (306) is one of an advanced metering infrastructure (AMI) network or a home area network (HAN).

3. The method of claim 1 or claim 2, wherein configuring the entrapment meter (302) in a manner such that the entrapment meter (302) appears vulnerable to unauthorized intrusion to the network (306) comprises receiving data packets from the network (306) using a network interface card set to promiscuous mode.

4. The method of any of claims 1 to 3, wherein detecting, using the entrapment meter (302), an attempted unauthorized intrusion into the network (306) comprises analyzing the received data packets using a network intrusion detection system (NIDS).

5. The method of any of claims 1 to 4, wherein detecting, using the entrapment meter (302), an attempted unauthorized intrusion into the network (306) comprises analyzing at least a portion of the network (306) using a host-based intrusion detection system (HIDS).

6. A system for detecting an attempted intrusion into a network comprised of:
an entrapment meter (302), wherein the entrapment meter (302) is configured to receive data packets from a network (306), but not transmit data packets to the network (306), and is configured in a manner such that the entrapment meter (302) appears vulnerable to unauthorized intrusion to the network (306);
a memory (712); and
a processor (703) operably connected with the memory (712) and the entrapment meter (302), wherein the processor (703) is configured to:
detect an attempted unauthorized intrusion into the network (306); and
monitor the attempted unauthorized intrusion.

7. The system of claim 6, wherein the entrapment meter (302) comprises a network interface card to connect to the network (306) and configuring the entrapment meter (302) in a manner such that the entrapment meter (302) appears vulnerable to unauthorized intrusion to the network (306) comprises receiving data packets from the network (306) using the network interface card set to promiscuous mode.

8. The system of claim 6 or claim 7, further comprising a network intrusion detection system (NIDS), wherein detecting an attempted unauthorized intrusion into the network (306) comprises analyzing the received data packets using the NIDS.

9. The system of any of claims 6 to 8, further comprising a host-based intrusion detection system (HIDS), wherein detecting an attempted unauthorized intrusion into the network (306) comprises analyzing at least a portion of the network (306) using the host-based intrusion detection system (HIDS).

10. A device comprised of:
a memory (506);
a processor (504) operably connected with the memory (506); and
a network interface card that is configured to connect the device with a network (306), wherein the network interface card is configured to receive data packets from the network (306), but not transmit data packets to the network (306), and the network interface card is set to promiscuous mode, and wherein the processor (504) is configured to execute at least one of a network intrusion detection system (NIDS) or a host-based intrusion detection system (HIDS), wherein the device detects an attempted unauthorized intrusion into the network (306) by analyzing the received data packets using the NIDS or by analyzing at least a portion of the network (306) using the HIDS, and wherein the network (306) is one of an advanced metering infrastructure (AMI) network or a home area network (HAN).
